# EUROPEAN PATENT SPECIFICATION

(11) **EP 0 311 588 B1**
(45) Date of publication and mention of the grant of the patent: **13.01.1993**
(21) Application number: 88850336.4
(22) Date of filing: 10.10.1988
(51) Int. Cl.: G01N 15/10, G01N 33/49

(54) **Method and apparatus for volumetric determination, dilution and transfer of liquid specimens**
Verfahren und Vorrichtung zur volumetrischen Bestimmung, Verdünnung und Übertragung von Flüssigkeitsproben
Méthode et appareil pour la détermination volumétrique, la dilution et le transfert d'échantillons liquides

(30) Priority: 09.10.1987 SE 8703987
(43) Date of publication of application: 12.04.1989
(73) Proprietor: MEDONIC INGEMAR BERNTSSON AB, S-171 40 Solna (SE)
(72) Inventor: Berndtsson, Ingemar, S-191 43 Sollentuna (SE)
(74) Representative: Ellner, Lars O.

(56) References cited:
- EP-A- 0 180 063
- WO-A-87/00280
- US-A- 3 549 994
- US-A- 3 649 218
- US-A- 3 726 144
- US-A- 4 002 269

## Description

The present invention relates to a method and an apparatus for volumetric determination, dilution and transfer of liquid specimens, especially blood samples for blood-count.

A blood-count is normally carried out in two different dilutions, a less diluted solution, for example 1:400, and a more diluted solution, for example 1:40,000. The reagent used for diluting is a physiological saline solution. White corpuscles are counted in the less diluted solution after addition of a so-called hemolysing agent which destroys the red corpuscles. The hemolysing agent can be supplied in concentrated form or strongly diluted, but then the dilution previously made must be adjusted such that the final dilution ratio becomes correct, in our example 1:400. When the red corpuscles are destroyed by the hemolysing agent, hemoglobin is released, and after a chemical conversion together with the hemolysing agent, the hemoglobin content or the so-called blood value is measured photometrically (degree of red colouring). The red corpuscles are counted in the more diluted solution (in our example 1:40,000).

The two dilutions mentioned above are normally effected in two steps. For example, 20 µl blood sample in 8 ml reagent yields a dilution of 1:400, and then 100 µl of the first dilution in 10 ml reagent yields a dilution of 1:40,000.

In known methods and apparatus for volumetric determination, dilution and transfer of blood samples, the first dilution is made in a mixing beaker, and part of the mixture is transferred to a counting beaker and is further diluted with a reagent for counting the red corpuscles. The remainder of the mixture in the mixing beaker is transferred to another counting beaker, and a hemolysing agent is added for destroying the red corpuscles. When the last portion of the contents of the mixing beaker is transferred, air will also flow into the mixing beaker. Since the hemolysing agent is strongly frothing, large amounts of microscopic bubbles of air are formed. These bubbles remain for a long time and then make cell counting impossible since the bubbles themselves will be counted or interpreted as cells (white corpuscles). However, cell counting should start promptly, thereby to reduce the total time of a diluting/counting cycle.

The object of the present invention is to obviate the above-mentioned disadvantages of microscopic bubbles of air by simply eliminating them. This is achieved in that only a fixed portion of the contents of the mixing beaker is transferred to the counting beaker, and in that the transfer will thus not be concluded by a supply of air.

An embodiment of the invention will now be described with reference to the accompanying drawing in which
Fig. 1 illustrates schematically a prior art method and apparatus for the transfer of liquid specimens, and
Fig. 2 shows schematically a method and an apparatus for the transfer of liquid specimens according to the present invention.

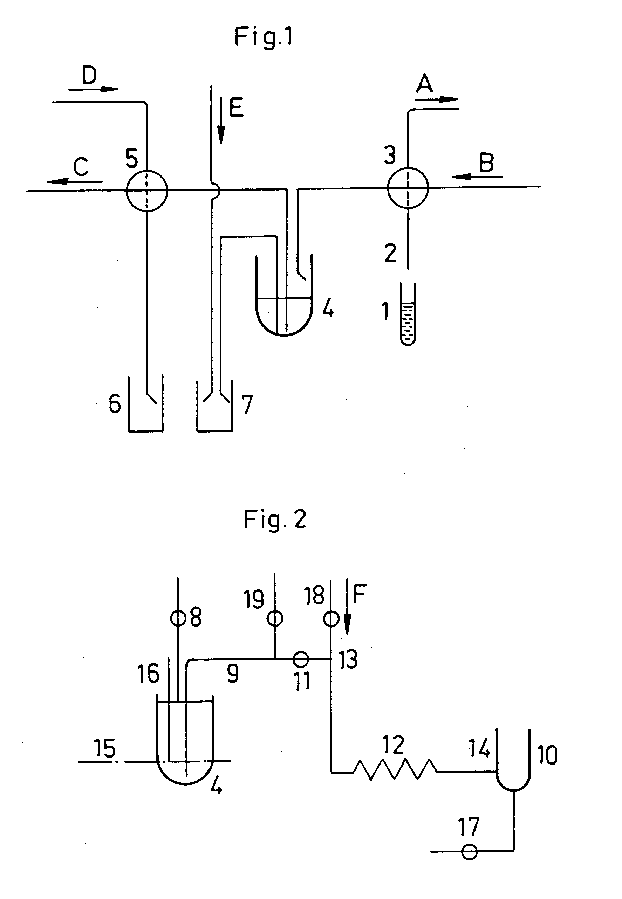

Fig. 1 shows schematically a prior art method and apparatus for volumetric determination, dilution and transfer of liquid specimens. From a blood sample 1, a relatively large amount of blood is sucked up through a spout 2 and through a first turning valve 3 in the direction of arrow A. The suction is terminated, and the turning valve 3 is turned through 90° to a horizontal position. The volume of the turning valve 3 is for example 20 µl. In the direction of arrow B, a fixed volume of reagent, for example 8 ml, is now added and presses the smaller amount of blood down into the mixing beaker 4, which yields a dilution ratio of 1:400 in the beaker. From the beaker 4, a small portion of the mixture is sucked up through a second turning valve 5 in the direction of arrow C. The suction is terminated, and the turning valve 5 is turned to a vertical position. The volume of the turning valve 5 is for example 100 µl. A fixed volume of reagent, for example 10 ml, is now added in the direction of arrow D and presses the mixture in the turning valve 5 into a counting beaker 6 for counting red corpuscles. A dilution ratio of 1:40,000 is now obtained in the counting beaker 6. Since the dilution ratio in the mixing beaker was 1:400, this means that a dilution of 1:100 (100 µl in 10 ml) has now been achieved.

The contents of the mixing beaker 4 are transferred, for example by pressure, to a counting beaker 7 for white corpuscles, at the same time as a hemolysing agent in concentrated or diluted form is supplied in the direction of arrow E. As mentioned above, the hemolysing agent is strongly frothing so that, when the mixing beaker has been drained of its contents, the counting beaker 7 will also contain air which together with the hemolysing agent forms large amounts of microscopic bubbles. As explained above, the counting of white corpuscles therefore cannot start before the bubbles have disappeared.

Fig. 2 shows schematically a method and an apparatus according to the present invention, in which the problem of the above-mentioned bubble formation has been eliminated. The first step in the dilution and transfer of liquid specimens to the mixing beaker 4 can be effected according to the method described above, but with the difference that the dilution in the mixing beaker is adjusted to have a higher concentration than that finally desired in the counting beaker.

When the transfer from the mixing beaker 4 to a counting beaker 10 is to be effected, a positive pressure is applied to the mixing beaker 4 through a valve 8. The mixture is pressed down through a tube 9, a valve 11 and a volume buffer 12 into the counting beaker 10. The volume buffer 12 consists of, for example, a hose coil or a tube. The mixture fills the entire volume buffer 12 whose volume from a point 13 to a point 14 at the mouth of the volume buffer in the counting beaker 10 is known and fixed. The excess which flows into the counting beaker 10, is sucked off through a valve 17. The essential thing is that the volume buffer 12 between the points 13 and 14 is entirely filled with the sample, and that there are no air bubbles. One way of ensuring this is to measure the level in the mixing beaker 4. When this has reached the level 15, which can be indicated by e.g. a detector consisting of an electrode 16, the second electrode being the tube 9, the valve 11 is closed. A valve 19 is opened, and the remainder of the contents of the mixing beaker 4 is pressed out through the valve 19, and at the same time any excess in the counting beaker 10 is sucked off in a few seconds, whereupon the valve 17 is closed. Now a valve 18 is opened, and a fixed amount of hemolysing agent, for example twice the amount of the volume of the volume buffer 12 between the points 13 and 14, is supplied in the direction of arrow F and flushes the mixture into the counting beaker 10.

If the dilution ratio in the mixing beaker has, for example, been fixed at 1:200, and if the volume of the hose between points 13 and 14 is 2.6 ml, and the volume of hemolysing agent flushing the contents of the hose into the counting beaker is 5.2 ml, the total volume in the counting beaker will be 5.2 ml, and the dilution ratio 1:400, i.e. 2.6 ml of the mixture from the hose and 2.6 ml of the hemolysing agent. The last 2.6 ml hemolysing agent fills the hose. In this manner, no microbubbles can form, since no air will enter the counting beaker 10. Therefore, the counting of white blood corpuscles can start promptly.

The technique described above further brings the advantage that for manually prediluted samples, for example when a limited amount of whole blood from children or animals is available, one need merely dilute the sample to the correct mixing ratio and see to it that the total volume exceeds a given minimum volume. The prediluted sample can be supplied to the mixing beaker 4 by a special supply duct, and only part of the sample is removed from the mixing beaker in the manner described above, in our example down to level 15.

The invention is, of course, not restricted to the embodiment described above and shown in the drawing, but may be modified within the scope of the appended claims.

## Claims

1. A method for volumetric determination, dilution and transfer of liquid specimens, especially blood samples for counting corpuscles, comprising the steps of sucking up a relatively large amount of specimen, and of pressing, by means of a fixed volume of a reagent, a fixed volume of the sucked-up specimen into a mixing beaker, so as to obtain a mixture in a first dilution, **characterised** by the steps of transferring, via a volume buffer, the mixture to a counting beaker by means of excess pressure in the mixing beaker, of terminating the transfer from the mixing beaker before the entire mixture has been transferred from the mixing beaker, but after the mixture has entirely filled the volume buffer, of sucking off any excess in the counting beaker, and of flushing, by means of a fixed volume of a hemolysing agent, which exceeds the volume of the buffer, the mixture in the volume buffer into the counting beaker, so as to obtain a mixture in a second dilution, the volume buffer being entirely filled with the hemolysing agent after the flushing has been terminated.

2. The method as claimed in claim 1, **characterised** in that the volume of hemolysing agent is twice the buffer volume.

3. The method as claimed in claim 1 or 2, **characterised** in that the dilution ratio of specimen to reagent in the mixing beaker is in the order of magnitude of 1:200, and in the counting beaker in the order of magnitude of 1:400.

4. An apparatus for volumetric determination, dilution and transfer of liquid specimens, especially blood samples for counting corpuscles, for carrying out the method as claimed in claim 1, comprising a means for sucking up an amount of specimen through a turning valve in a first position, and a means for pressing out, by a fixed volume of the reagent, the amount of specimen included in the turning valve turned to a second position, into a mixing beaker, whereby a mixture in a first dilution is obtained, **characterised** by a means for applying excess pressure to said mixing beaker (4), a tube (9) between the mixing beaker (4) and a counting beaker (10) for transferring the mixture to the counting beaker, a valve (11) in said tube (9) for terminating the transfer, a detector (16) in the mixing beaker (4) for sensing when the level in the mixing beaker (4) falls below a fixed level (15), a means for sucking off any excess in the counting beaker (10), and a means for supplying a fixed volume of a hemolysing agent to the tube (9), the tube (9) downstream of the valve (11), from a point (13) at which the hemolysing agent is supplied and up to the mouth (14) of the tube in the counting beaker (10), having such length and cross-sectional area that a volume buffer (12) having a fixed volume is formed.

## Patentansprüche

1. Verfahren zur volumetrischen Bestimmung, Verdünnung und Übertragung von flüssigen Proben, besonders Blutproben zum Zählen von Blutkörperchen, umfassend die Schritte des Aufsaugens einer relativ großen Probenmenge und des Hineinpressens eines festgesetzten Volumens der aufgesaugten Probe in einen Mischbecher mittels eines festgesetzten Volumens eines Reagenzes, um eine Mischung in einer ersten Verdünnung zu erhalten, **gekennzeichnet durch** die Schritte des Übertragens, mittels eines Volumenpuffers, der Mischung in einen Zählbecher durch Überdruck in dem Mischbecher, des Beendens der Übertragung aus dem Mischbecher, bevor die gesamte Mischung aus dem Mischbecher übertragen worden ist, aber nachdem die Mischung vollkommen den Volumenpuffer gefüllt hat, des Absaugens von Überschußmengen in dem Zählbecher und des Spülens der Mischung in dem Volumenpuffer in den Zählbecher mit einem festgesetzten Volumen eines hämolysierenden Mittels, welches das Volumen des Puffers überschreitet, so daß eine Mischung in einer zweiten Verdünnung erhalten wird, wobei der Volumenpuffer vollkommen mit dem hämolysierenden Mittel gefüllt ist, nachdem das Spülen beendet worden ist.

2. Verfahren nach Anspruch 1, **dadurch gekennzeichnet,** daß das Volumen des hämolysierenden Mittels das zweifache des Puffervolumens beträgt.

3. Verfahren nach Anspruch 1 oder 2, **dadurch gekennzeichnet,** daß das Verdünnungsverhältnis von Probe zu Reagenz in dem Mischbecher in der Größenordnung von 1:200 und in dem Zählbecher in der Größenordnung von 1:400 liegt.

4. Vorrichtung zur volumetrischen Bestimmung, Verdünnung und Übertragung von flüssigen Proben, besonders Blutproben zum Zählen von Blutkörperchen, zum Ausführen des Verfahrens nach Anspruch 1, umfassend ein Mittel zum Aufsaugen einer Probenmenge durch ein Drehventil in einer ersten Position, und ein Mittel zum Herausdrücken der Probenmenge, die in dem in eine zweite Position gedrehten Drehventil eingeschlossen ist, in einen Mischbecher mittels eines festgesetzten Volumens des Reagenzes, wodurch eine Mischung in einer ersten Verdünnung erhalten wird, **gekennzeichnet durch** ein Mittel zum Ausüben von Überdruck auf den Mischbecher (4), ein Rohr (9) zwischen dem Mischbecher (4) und einem Zählbecher (10) zum Übertragen der Mischung in den Zählbecher, ein Ventil (11) in dem Rohr (9) zum Beenden der Übertragung, einen Detektor (16) in dem Mischbecher (4) zum Erkennen, wenn der Spiegel in dem Mischbecher (4) unter einen festgelegten Spiegel (15) fällt, ein Mittel zum Absaugen einer Überschußmenge in dem Zählbecher (10), und ein Mittel zum Zuführen eines festgesetzten Volumens eines hämolysierenden Mittels in das Rohr (9), wobei das Rohr (9) stromabwärts von dem Ventil (11) , von einem Punkt (13) aus, bei dem das hämolysierende Mittel zugeführt wird und bis zu der Mündung (14) des Rohrs in den Zählbecher (10), eine solche Länge und Querschnittsfläche hat, daß ein Volumenpuffer (12), der ein festgesetztes Volumen hat, gebildet wird.

## Revendications

1. Procédé de détermination volumétrique, dilution et transfert d'échantillons liquides, notamment d'échantillons sanguins destinés à la numération de globules, comprenant les étapes d'aspiration d'une quantité relativement importante d'échantillon et de pression, au moyen d'un volume déterminé d'un réactif, d'un volume déterminé de l'échantillon aspiré dans un bécher de mélange, de façon à obtenir un mélange à une première dilution, caractérisé par les étapes consistant à transférer, au moyen d'un volume tampon, le mélange à un bécher de numération au moyen d'une pression excessive dans le bécher de mélange, à mettre fin au transfert à partir du bécher de mélange avant que le mélange entier n'ait été transféré hors du bécher de mélange mais après que le mélange ait entièrement empli le volume tampon, à retirer par aspiration toute quantité excessive dans le bécher de numération et à entraîner au moyen d'un volume déterminé d'un agent hémolysant supérieur au volume du tampon, le mélange dans le volume tampon dans le bécher de numération, de façon à obtenir un mélange à une seconde dilution, le volume tampon étant entièrement empli de l'agent hémolysant après qu'il a été mis fin à l'entraînement.

2. Procédé selon la revendication 1, caractérisé en ce que le volume d'agent hémolysant est double du volume du tampon.

3. Procédé selon la revendication 1 ou 2, caractérisé en ce que le rapport de dilution de l'échantillon au réactif est de l'ordre de 1 : 200 dans le bécher de mélange et de l'ordre de 1 : 400 dans le bécher de numération.

4. Appareil de détermination volumétrique, de dilution et transfert d'échantillons liquides, notamment d'échantillons sanguins destinés à la numération de globules, destiné à mettre en oeuvre le procédé selon la revendication 1, comprenant un moyen d'aspiration d'une quantité d'échantillon à travers une valve rotative en une première position et un moyen d'expulsion, à l'aide d'un volume déterminé du réactif, de la quantité d'échantillon incluse dans la valve rotative tournée dans une seconde position, dans un bécher de mélange, un mélange à une première dilution étant obtenu, caractérisé par un moyen d'application d'une pression excessive sur ledit bécher de mélange (4), un tube (9) situé entre le bécher de mélange (4) et un bécher de numération (10) destiné au transfert du mélange au bécher de numération, une valve (11) dans ledit tube (9) destinée à mettre fin au transfert, un détecteur (16) dans le bécher de mélange (4) destiné à capter le moment où le niveau dans le bécher de mélange (4) devient inférieur à un niveau déterminé (15), un moyen d'élimination par aspiration de toute quantité excessive dans le bécher de numération (10) et un moyen d'apport d'un volume déterminé d'un agent hémolysant au tube (9), le tube (9) en aval de la valve (11), à partir d'un point (13) auquel l'agent hémolysant est apporté et jusqu'à l'embouchure (14) du tube dans le bécher de numération (10), ayant une longueur et une section transversale telles qu'il s'y forme un volume tampon (12) de volume déterminé.
